# EUROPÄISCHE PATENTSCHRIFT

(11) **EP 0 924 119 B1**
(45) Veröffentlichungstag und Bekanntmachung des Hinweises auf die Patenterteilung: **28.01.2004**
(21) Anmeldenummer: 98121631.0
(22) Anmeldetag: 12.11.1998
(51) Int. Cl.: B60K 31/00

(54) **Abstandsbezogenes elektronisch gesteuertes Fahrgeschwindigkeitsregelsystem**
Electronic controlled vehicle speed driving system dependent of distance
Système électronique pour régler la vitesse d'après l'espacement

(30) Priorität: 20.12.1997 DE 19757062
(43) Veröffentlichungstag der Anmeldung: 23.06.1999
(73) Patentinhaber: Bayerische Motoren Werke Aktiengesellschaft, 80788 München (DE)
(72) Erfinder: Prestl, Willibald Dr., 82223 Eichenau (DE); Steinle, Joachim Dr., 80993 München (DE); Tschernoster, Oliver, 80939 München (DE)

(56) Entgegenhaltungen:
- EP-A2- 0 501 345
- JP-A- 6 199 148
- US-A- 4 670 845
- US-A- 5 631 639

## Beschreibung

Die Erfindung bezieht sich auf ein abstandsbezogenes Fahrgeschwindigkeitsregelsystem nach dem Oberbegriff des Patentanspruchs 1.

Ein derartiges Fahrgeschwindigkeitsregelsystem ist beispielsweise aus der US 5,014,200 bekannt. Derartige bekannte adaptive Fahrgeschwindigkeitsregelsysteme (ACC = adaptive cruise control) bestehen insbesondere aus zwei Komponenten:
1. aus einem Fahrgeschwindigkeitsregler, der grundsätzlich eine vom Fahrer vorgegebene Geschwindigkeit konstant hält und
2. aus einem Sensorsystem zur Erfassung des Abstands zum jeweils vorausfahrenden Fahrzeug.

Ein derartiges Sensorsystem enthält beispielsweise eine Radarobjekterfassungssensorik, die üblicherweise stehende Objekte für die Zwecke der Fahrgeschwindigkeitsregelung ignoriert. Der Grund hierfür ist, daß eine sichere Bewertung von stehenden Objekten hinsichtlich der Relevanz für die Fahrgeschwindigkeitsregelung mit dem aktuellen Stand der Sensortechnologie nicht möglich ist, da weder eine Typisierung der Objekte noch deren Lage zur eigenen Fahrspur ausgehend von der sensorischen Erfassung gegeben ist. Ein erkanntes stehendes Objekt kann z. B. ein Verkehrszeichen abseits der Fahrbahn sein oder aber ein stehendes Fahrzeug in der Spur mit Relevanz für die Fahrgeschwindigkeitsregelung.

Bei üblichen abstandsbezogenen adaptiven Fahrgeschwindigkeitsregelsystemen wird während eines ersten Regelbetriebs grundsätzlich eine vorgegebene Geschwindigkeit konstant gehalten, bis ein vorgegebener Mindestabstand zu einem vorausfahrenden Fahrzeug erreicht oder unterschritten wird. Während eines zweiten Regelbetriebs findet ab Erreichen oder Unterschreiten dieses vorgegebenen Mindestabstandes eine Geschwindigkeitsregelung derart statt, daß der vorgegebene Mindestabstand in Form einer abstandsgeregelten Folgefahrt eingehalten wird.

Wird ein Fahrzeug mit einem derartigen Fahrgeschwindigkeitsregelsystem von einem vorausfahrenden Fahrzeug geführt (abstandsgeregelte Folgefahrt) und ist die vom Fahrer vorgegebene Geschwindigkeit höher als die durch die abstandsgeregelte Folgefahrt erreichte Ist-Geschwindigkeit, so würde ein Ausscheren des vorausfahrenden Fahrzeuges zu einer Beschleunigung auf die vorgegebene Geschwindigkeit führen. Diese Reaktion entspricht in der Regel dem Fahrerwunsch. Befand sich jedoch ein stehendes Objekt, insbesondere ein stehendes Fahrzeug, vor dem zuvor vorausfahrenden Fahrzeug, also innerhalb der Fahrspur, könnte eine Beschleunigung zu einer kritischen Situation führen. Diese Situation kann besonders im Stadtverkehr auftreten. Da dieses stehende Fahrzeug nach dem Stand der Technik für die Regelung ignoriert werden würde, würde das Fahrzeug in für den Fahrer unplausibler Weise auf das stehende Fahrzeug beschleunigen. Daraus resultiert die Gefahr einer Fahrerirritation, zumindest aber eine Komfortbeeinträchtigung.

Es ist Aufgabe der Erfindung, den Nachteil eingangs genannter Art zu verhindern.

Diese Aufgabe wird durch die kennzeichnenden Merkmale des Patentanspruchs 1 gelöst.

Eine vorteilhafte Weiterbildung der Erfindung ist der Gegenstand des Unteranspruchs.

Durch die Erfindung werden erkannte stehende Objekte innerhalb einer vorausprädizierten eigenen Fahrspur in begrenztem Umfang in ein abstandsbezogenes Fahrgeschwindigkeitsregelsystem in der Form miteinbezogen, daß auf solche Objekte nicht beschleunigt wird, d. h. die Sollbeschleunigung wird auf Null oder einen sehr niedrigen Wert beschränkt. Erfindungswesentlich ist, daß bei großen Abständen zum stehenden Objekt und/oder bei hohen Ist-Geschwindigkeiten stehende Objekte weiterhin ignoriert werden. Jedoch bei niedriger Geschwindigkeit und/oder bei geringem Abstand zu stehenden Objekten, d. h. bei Vorliegen einer hohen Detektionssicherheit eines Objekts mit Relevanz für das Fahrgeschwindigkeitsregelsystem, wird die übliche Beschleunigung beim Wechsel vom zweiten Regelbetrieb in den ersten Regelbetrieb zumindest reduziert. Bei sehr geringem Abstand zu stehenden Objekten wird vorzugsweise auch eine Verzögerung eingeleitet.

Durch dieses erfindungsgemäße Fahrgeschwindigkeitsregelsystem wird vermieden, daß der Fahrer eine systembedingte Beschleunigung beim Wechsel vom zweiten in den ersten Regelbetrieb als unberechtigte Selbstbeschleunigung auf ein Hindernis interpretieren könnte.

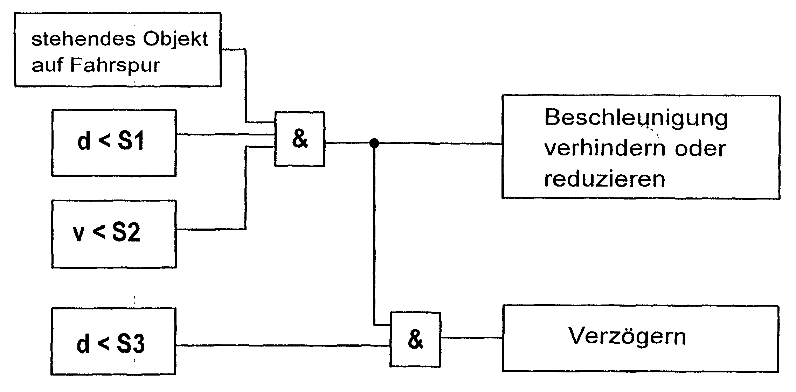

In der Zeichnung ist ein Ausführungsbeispiel der Erfindung dargestellt. Sie zeigt einen möglichen Logikschaltplan, der zur Durchführung der Erfindung beispielsweise in einem für Fahrgeschwindigkeitsregelsysteme vorgesehenen elektronischen Steuergerät integriert ist.

Wird insbesondere nach Ausscheren des zuvor vorausfahrenden Fahrzeugs während des zweiten Regelbetriebs in Form einer abstandsgeregelten Folgefahrt ein stehendes Objekt in der Fahrspur erkannt, liegt der Abstand d zu diesem stehenden Objekt unterhalb einer ersten definierten Schwelle S1 und ist die momentane Ist-Geschwindigkeit v kleiner als eine zweite definierte Schwelle S2, wird beim Übergang vom zweiten Regelbetrieb in den ersten Regelbetrieb eine Beschleunigung zumindest reduziert oder verhindert.

Ist jedoch der Abstand d kleiner als eine dritte definierte Schwelle S3, wobei die dritte Schwelle S3 niedriger als die erste Schwelle S1 ist, wird nicht nur die Beschleunigung verboten sondern auch eine Verzögerung eingeleitet.

Diese Ausführungsform stellt das vorteilhafteste Beispiel für das erfindungsgemäße Fahrgeschwindigkeitsregelsystem dar.

## Patentansprüche

1. Abstandsbezogenes elektronisch gesteuertes Fahrgeschwindigkeitsregelsystem für Kraftfahrzeuge, bei dem während eines ersten Regelbetriebes grundsätzlich eine vorgegebene Geschwindigkeit konstant gehalten wird, bis ein vorgegebener Mindestabstand zu einem vorausfahrenden Fahrzeug erreicht oder unterschritten wird und bei dem während eines zweiten Regelbetriebes ab Erreichen oder Unterschreiten dieses vorgegebenen Mindestabstandes eine Geschwindigkeitsregelung derart stattfindet, daß der vorgegebene Mindestabstand in Form einer abstandsgeregelten Folgefahrt eingehalten wird, **dadurch gekennzeichnet, daß** stehende Objekte innerhalb einer vorausprädizierten eigenen Fahrspur erkannt werden und daß im Falle einer Erkennung eines stehenden Objekts vor dem vorausfahrenden Fahrzeug während des zweiten Regelbetriebs nach Ausscheren des zuvor vorausfahrenden Fahrzeugs beim Übergang vom zweiten Regelbetrieb in den ersten Regelbetrieb eine Beschleunigung auf die vorgegebene Geschwindigkeit verhindert oder reduziert wird, wenn der Abstand (d) zum stehenden Objekt kleiner als eine erste Schwelle (S1) ist und/oder wenn die momentane Ist-Geschwindigkeit (v) kleiner als eine zweite Schwelle (S2) ist.

2. Abstandsbezogenes elektronisch gesteuertes Fahrgeschwindigkeitsregelsystem nach Anspruch 1, **dadurch gekennzeichnet, daß** beim Übergang in den ersten Regelbetrieb eine Verzögerung eingeleitet wird, wenn der Abstand (d) zum stehenden Objekt kleiner als eine dritte Schwelle (S3) ist, wobei die dritte Schwelle (S3) kleiner als die erste Schwelle (S1) ist.

## Claims

1. A distance related electronically controlled vehicle speed regulating system for motor vehicles, in which during a first regulating operation basically a prescribed speed is held constant, until a predetermined least distance to a preceding vehicle is reached or fallen below and at which a second regulating operation takes place in such a manner from the reaching or falling below this predetermined least distance a speed regulation takes place in such a manner that the predetermined least distance is maintained in the form of a distance regulated following travel, **characterised in that** stationary objects within a previously predicated own travelling track are recognised and that in the event of the detection of a stationary object in front of the preceding vehicle during the second regulating operation after the veering away of the previously preceding vehicle on the transfer from the second regulating operation into the first regulating operation any acceleration from the predetermined speed is prevented or reduced, if the distance (d) to the stationary object is smaller than a first threshold (S1) is and/or if the instantaneous actual speed (v) is smaller than a second threshold (S2).

2. A distance related electronically controlled vehicle speed regulation system according to claim 1, **characterised in that,** on the transfer to the first regulating operation braking is introduced if the distance (d) to the stationary object is smaller than a third threshold (S3) in which the third threshold (S3) is smaller than the first threshold (S1).

## Revendications

1. Système de régulation de vitesse, à commande électronique rapportée à une distance, pour véhicules automobiles, avec lequel, par un premier mode de régulation, une vitesse prédéfinie est maintenue principalement constante jusqu'à ce qu'une distance minimale prédéfinie par rapport à un véhicule qui précède est atteinte ou est sous-dépassée, et par un deuxième mode de régulation, quand cette distance minimale prédéfinie est atteinte ou sous-dépassée, on établit une régulation de la vitesse de telle sorte que la distance minimale prédéfinie est respectée sous la forme d'une vitesse de suite réglée sur une certaine distance,
**caractérisé en ce que**
tout obstacle immobile à l'intérieur d'une voie de circulation propre prévue est identifié et pendant le deuxième mode de régulation, dans le cas d'une identification d'un obstacle immobile devant le véhicule qui précède, après un déboîtement du véhicule juste qui précède, lors du transfert du deuxième mode de régulation vers le premier mode de régulation, toute accélération sur la vitesse prédéfinie est empêchée ou réduite lorsque la distance (d) par rapport à l'obstacle immobile est inférieure à un premier seuil (S1) et/ou lorsque la vitesse réelle (v) instantanée est inférieure à un deuxième seuil (S2).

2. Système de régulation de vitesse pour véhicule rapporté à une distance et à commande électronique selon la revendication 1,
**caractérisé en ce que**
lors du transfert vers le premier mode de régulation, une décélération est engagée lorsque la distance (d) par rapport à l'obstacle immobile est inférieure à un troisième seuil (S3), le troisième seuil (S3) étant inférieur au premier seuil (S1).
